# EUROPEAN PATENT APPLICATION

(11) **EP 1 550 956 A1**
(43) Date of publication of application: **06.07.2005**
(21) Application number: 04030526.0
(22) Date of filing: 22.12.2004
(51) Int. Cl.: G06F 17/30

(54) **Assigning textual ads based on article history**

(30) Priority: 30.12.2003 US 749462
(71) Applicant: MICROSOFT CORPORATION, Redmond, WA 98052 (US)
(72) Inventor: Petersen, Joshua D., Redmond Washington 98052 (US); Rosser, Peter E., Redmond Washington 98052 (US)
(74) Representative: Grünecker, Kinkeldey, Stockmair & Schwanhäusser Anwaltssozietät

(57) **Abstract**

A method of selecting textual advertisements for display on a web page based on user history. In the method, a user accessing a web site is identified. Keywords in articles displayed on web pages viewed by the user are identified and stored in a user profile. The advertisements displayed on a current user selected web page are based on keywords from the articles viewed by the user in the past that are stored in the user profile.

## Description

### Field of the Invention

The present disclosure concerns a method and system for selecting textual advertisements for display on a web page and, more particularly, a method and system for selecting textual advertisements for display on a web page based on a history of articles viewed by a user.

### Background Art

Operators of intemet web pages generate revenue by selling advertising space on their web pages. Textual advertisements are advertisements that include text keywords and are assigned text keywords. Textual advertisements have been used to monetize search results and to monetize web pages including content, such as news articles. In prior advertising placement schemes, when a query is entered into a search box a web page is returned that includes both search results and advertising. The advertising in these prior schemes is contextually related to the query or the search results. This placement scheme has also been used with static web pages with advertisements being rendered based on the keywords on the page. One problem with these prior advertising techniques is that advertisements could be assigned to potentially embarrassing articles. For example, a search that returns a story about an airline crash could also return an advertisement for the airline involved in the crash.

One existing automated news service clusters news stories from the web and algorithmically generates a news home page and section pages based on the metadata related to news articles posted on the internet. This service personalizes news articles shown to users based on keywords of news stories a user has selected in the past. The advertisements placed on the web pages generated by this service are selected based on the contents of the news story on the displayed web page.

### Summary

The present disclosure concerns a method and system for selecting textual advertisements for display on a web page based on context of articles previously viewed by a user. In the method, a user accessing a web site is identified. Keywords in articles displayed on web pages viewed by the user are identified and stored in a user profile. The advertisements displayed on a current user selected web page are based on keywords from the articles viewed by the user in the past that are stored in the user profile.

In one embodiment, keywords are assigned to advertisements and the advertisements displayed on the current user selected web page have assigned keywords that are also stored in the user profile or are related to keywords stored in the user profile.

In one embodiment, weights are assigned to keywords stored in the user profile. These weights are used to select advertisements for display on the current user selected web page. These weights may be reduced as time elapses to reflect that ads having keywords from more recently viewed articles may tend to be more interesting to the user. Weights may also be assigned to advertisement keywords for selecting advertisements for display on the current user selected web page.

In one embodiment, advertisements displayed on a current user selected web page are based on keywords from the articles viewed by the user in the past that are stored in the user profile and keywords from an article displayed on the current user selected web page.

Use of a history of articles viewed by a user to select advertisements for display on a web page allows relevant advertisements to be selected for display without regard to user specific traits. For example, pertinent advertisements can be selected without knowing the user's age, sex, income, etc. In addition, use of keywords from articles previously viewed by a user to select advertisements allows advertisements to be selected that are in a different language than the article displayed on the current user selected web page.

The system for selecting textual advertisements for display on a web page based on user history includes a user terminal, a web server in communication with the user terminal, and a user profile database in communication with the web server. The user terminal displays web pages to the user. The web server is programmed to identify a user accessing the web server and to identify keywords in articles displayed on the user terminal. The user profile database stores identified keywords from the articles displayed on the user terminal in a user profile. The web server displays advertisements on a current user selected web page based on keywords from articles viewed by the user in the past that are stored in the user profile.

These and other objects, advantages, and features of an exemplary embodiment are described in conjunction with the accompanying drawings.

### Brief Description of the Drawings

Figure 1 is a schematic depiction of a computer system used in practicing an exemplary embodiment of the disclosed method;
Figure 2 is a flow chart of a method of selecting textual advertisements for display on a web page based on user history;
Figure 3 is a diagram of a system for selecting textual advertisements for display on a web page based on user history; and
Figure 4 is a schematic illustration of a web page that includes an article and textual ads.

### Detailed Description

### Exemplary Operating Environment

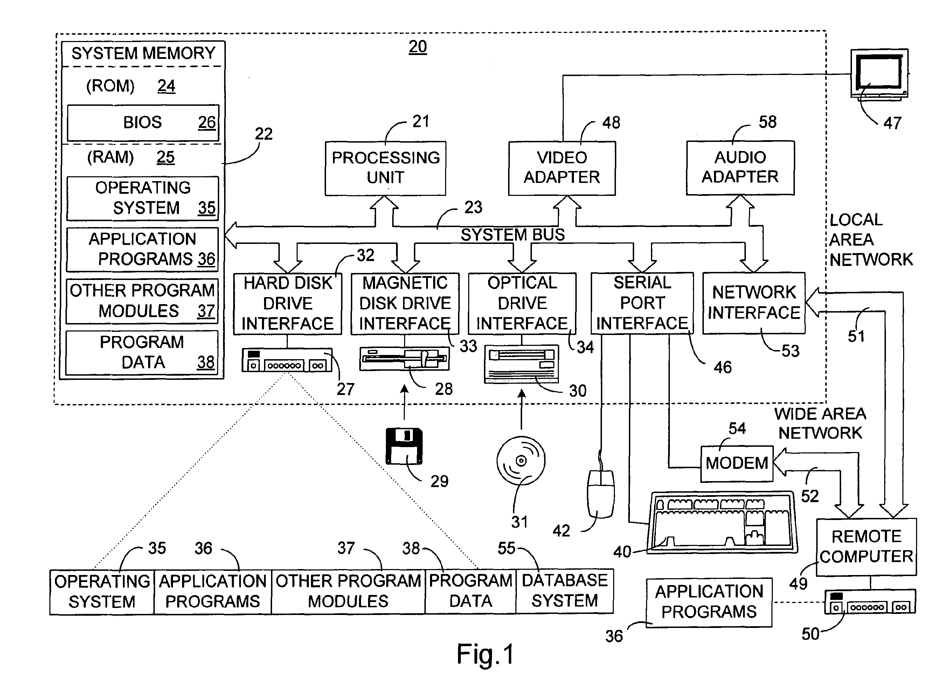

Figure 1 and the following discussion are intended to provide a brief, general description of a suitable computing environment in which the invention may be implemented. Although not required, the invention will be described in the general context of computer-executable instructions, such as program modules, being executed by a personal computer. Generally, program modules include routines, programs, objects, components, data structures, etc., that perform particular tasks or implement particular abstract data types. Moreover, those skilled in the art will appreciate that the invention may be practiced with other computer system configurations, including handheld devices, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to Figure 1, an exemplary system for implementing the invention includes a general purpose computing device in the form of a conventional personal computer 20, including a processing unit 21, a system memory 22, and a system bus 24 that couples various system components including system memory 22 to processing unit 21. System bus 23 may be any of several types of bus structures including a memory bus or memory controller, a peripheral bus, and a local bus using any of a variety of bus architectures. System memory 22 includes read only memory (ROM) 24 and random access memory (RAM) 25. A basic input/output system (BIOS) 26, containing the basic routines that help to transfer information between elements within personal computer 20, such as during start-up, is stored in ROM 24. Personal computer 20 further includes a hard disk drive 27 for reading from and writing to a hard disk, a magnetic disk drive 28 for reading from or writing to a removable magnetic disk 29 and an optical disk drive 30 for reading from or writing to a removable optical disk 31 such as a CD ROM or other optical media. Hard disk drive 27, magnetic disk drive 28, and optical disk drive 30 are connected to system bus 23 by a hard disk drive interface 32, a magnetic disk drive interface 33, and an optical drive interface 34, respectively. The drives and their associated computer-readable media provide nonvolatile storage of computer-readable instructions, data structures, program modules and other data for personal computer 20. Although the exemplary environment described herein employs a hard disk 27, a removable magnetic disk 29 and a removable optical disk 31, it should be appreciated by those skilled in the art that other types of computer-readable media which can store data that is accessible by computer, such as random access memories (RAMs), read only memories (ROMs), and the like may also be used in the exemplary operating environment.

A number of program modules may be stored on the hard disk 27, magnetic disk 29, optical disk 31, ROM 24 or RAM 25, including an operating system 35, one or more application programs 36, other program modules 37, and program data 38. A database system 55 may also be stored on the hard disk, magnetic disk 29, optical disk 31, ROM 24 or RAM 25. A user may enter commands and information into personal computer 20 through input devices such as a keyboard 40 and pointing device 42. Other input devices may include a microphone, joystick, game pad, satellite dish, scanner, or the like. These and other input devices are often connected to processing unit 21 through a serial port interface 46 that is coupled to system bus 23, but may be connected by other interfaces, such as a parallel port, game port or a universal serial bus (USB). A monitor 47 or other type of display device is also connected to system bus 23 via an interface, such as a video adapter 48. In addition to the monitor, personal computers typically include other peripheral output devices such as speakers and printers.

Personal computer 20 may operate in a networked environment using logical connections to one or more remote computers, such as a remote computer 49. Remote computer 49 may be another personal computer, a server, a router, a network PC, a peer device or other common network node, and typically includes many or all of the elements described above relative to personal computer 20, although only a memory storage device 50 has been illustrated in Figure 1. The logical connections depicted in Figure 1 include local area network (LAN) 51 and a widearea network (WAN) 52. Such networking environments are commonplace in offices, enterprise-wide computer networks, intranets, and the Internet.

When using a LAN networking environment, personal computer 20 is connected to local network 51 through a network interface or adapter 53. When used in a WAN networking environment, personal computer 20 typically includes a modem 54 or other means for establishing communication over wide area network 52, such as the Internet. Modem 54, which may be internal or external, is connected to system bus 23 via serial port interface 46. In a networked environment, program modules depicted relative to personal computer 20, or portions thereof, may be stored in remote memory storage device 50. It will be appreciated that the network connections shown are exemplary and other means of establishing a communications link between the computers may be used.

### Method of Selecting Textual Advertisements

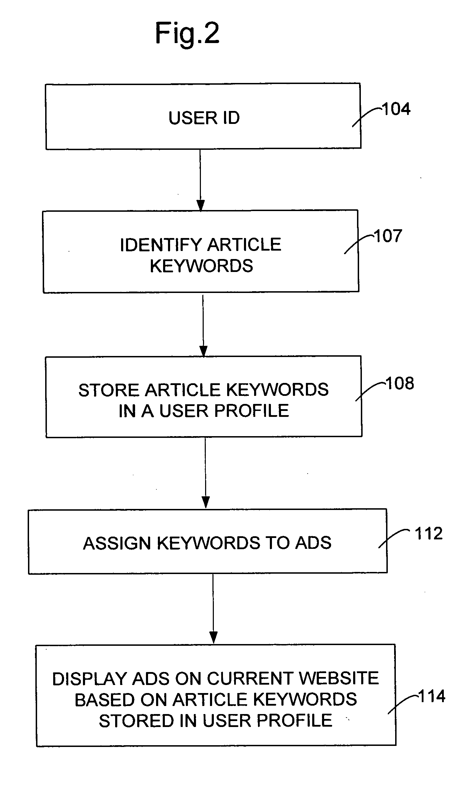

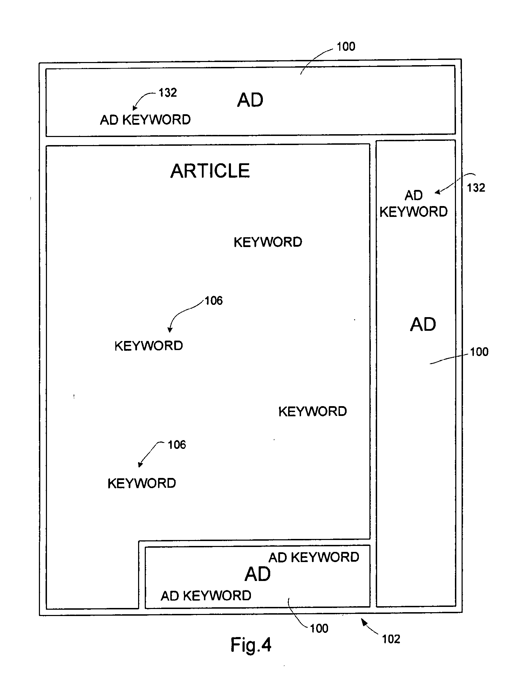

Referring to Figures 2-4, the disclosed method selects textual advertisements 100 for display on a web page 102 (figure 4) based on a user history or log of keywords from past articles selected by a user. In this application, the term "article" refers generally to content on a web page, including news stories and other news information. Figure 2 is a flow chart that illustrates the method. A user accessing a provider website is identified 104. Keywords 106 (figure 4) in articles displayed on web pages 102 viewed by the user are identified 107. Identified keywords from the articles viewed by the user are stored 108 in a user profile 110. In the exemplary embodiment, keywords are assigned 112 to advertisements on a current user selected web page are displayed 114 based on keywords from the articles viewed by the user in the past that are stored in the user profile 110. In the exemplary embodiment, advertisements 100 displayed on the current user selected web page 102 have assigned keywords 106 that are stored in the user profile 110 or are related to keywords that are stored in the user profile.

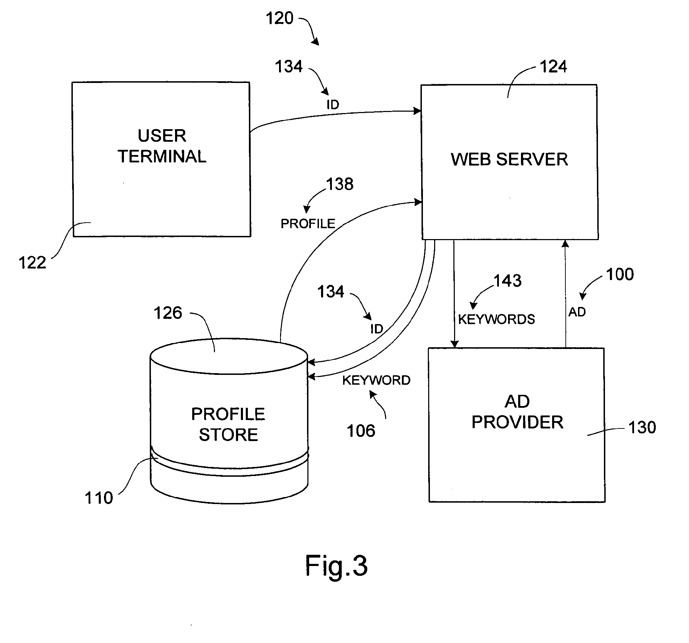

One system 120 that can be used to practice the disclosed method of selecting textual advertisements is illustrated by Figure 3. The illustrated system 120 includes a user terminal 122 for displaying web pages 102 (figure 4), a web server 124, and a user profile database 126 that stores user profiles for each user ID. The web server 124 is in communication with the user terminal. The web server is programmed to identify a user accessing the web server and identify keywords 106 in articles displayed on the user terminal 122. The user profile database 126 is in communication with the web server 124 for storing identified keywords 106 from the articles displayed on the user terminal in a user profile of an identified user. The web server 126 displays advertisements on a current user selected web page based on keywords from articles viewed by the user in the past that are stored in the user profile. In the exemplary embodiment, an advertisement server 130 for stores keywords 132 (figure 4) assigned to advertisements. The website and/or the advertisement server selects the advertisements for display on the current user selected web page that have assigned keywords that match keywords stored in the user profile or are related to keywords stored in the user profile.

In the exemplary embodiment, the web server 124 obtains a user ID 134 from the user terminal. If the user has not already been assigned a user ID, the web server assigns a user ID that is stored in the user terminal. In one embodiment, the user ID is a global unique ID or a cookie assigned to the user by the web server. In another embodiment, the user ID is obtained when a user signs in by entering a user name or e-mail address and a password.. The user ID 134 is provided by the web server to the user profile database. The user profile database 126 returns a stored user profile 138 that corresponds to the user ID 134. This user profile is empty the first time the identified user accesses the web server. The profile is built up and modified each time the user accesses the web server. The stored user profile 138 includes keywords from articles or news stories that are selected by the user and provided by the web server to the user terminal 122. As the user selects articles or news stories for viewing on the user terminal, keywords 106 from the selected articles or news stories are provided by the web server 124 to the user profile database 126. The keywords 106 may be selected from the articles by using one of many existing algorithms. For example, an inverse document frequency (IDF) algorithm could be used to select keywords from the articles. The user profile database continuously updates the user profile 110 with the keywords 106 from the articles or news stories selected by the user. As a result, the log of keywords in the user profile 110 change as the user selects articles or news stories for viewing. The web server 124 provides keywords 143 based on the keywords 106 from the user profile 110 to an advertisement server 130. The keywords 143 may be selected directly from the keywords in the user profile or the keywords 143 may be a combination of keywords stored in the user profile and keywords stored on the currently selected web page.

The advertisement server stores advertisements 100 having assigned keywords 132. In one embodiment, the ad0vertisements 100 that are provided by the advertisement server 130 to the web server for display on the current user selected web page have assigned keywords that match keywords from the user profile. In another embodiment, the advertisements 100 provided to the web server from the advertisement server 130 for displayed on a current user selected web page are selected based on keywords from the articles viewed by the user in the past that are stored in the user profile and keywords from an article displayed on the current user selected web page.

In one embodiment, weights are assigned to keywords stored in the user profile that are used to select advertisements for display on the current user selected web page. In the exemplary embodiment, these weights are reduced as time elapses. As a result, keywords stored in the user profiles gradually become less of a factor in selecting the advertisement for the currently selected web page as time elapses. In one embodiment, keywords from articles are removed from the user profile after a predetermined period of time elapses.

In one embodiment, weights are also given to keywords assigned to the advertisements. These weights assigned to the advertisements are also used to select which advertisement is to be displayed on the current user selected web page. Keywords that are closely related to the product being advertised may be given more weight than keywords that are not as closely related to the product being advertised.

The disclosed method and system allows relevant advertisements to be selected without regard for user specific traits. For example, user specific traits, such as age, sex, and/or income are not required to select relevant advertisements in the disclosed method.

In one embodiment, the current user selected web page is in a first language and keywords from the articles viewed by the user in the past that are stored in the user profile are in a second language. These keywords in the second language cause advertisements displayed on the current user selected web page to be in a language that is different than the primary language of the article or news story.

The disclosed method and system tracks the keyword history derived from several pages which a user views and chooses textual ads unique to the user's history, rather than the current page or the current query alone. By focusing on a user's history rather than the current page alone, a higher yielding advertising tool is provided. The disclosed method tracks, stores and retrieves keywords that are used for selecting the advertisements. This results in the advertisements being contextually related to the user's browsing history rather than the context of the current page alone.

While the present invention has been described with a degree of particularity, it is the intent that the invention include all modifications and alterations falling within the spirit or scope of the appended claims.

## Claims

1. A method of selecting textual advertisements for display on a web page based on user history, comprising:
a) identifying a user accessing a web site;
b) identifying keywords in articles displayed on web pages viewed by the user;
c) storing identified keywords from the articles viewed by the user in a user profile;
d) displaying advertisements in connection with a current user selected web page based on keywords from the articles viewed by the user in the past that are stored in the user profile.

2. The method of claim 1 further comprising assigning keywords to advertisements and wherein advertisements displayed on the current user selected web page have assigned keywords that are stored in the user profile.

3. The method of claim 1 further comprising assigning weights to keywords stored in the user profile that are used to select advertisements for display on the current user selected web page.

4. The method of claim 3 wherein said weights are reduced as time elapses.

5. The method of claim 2 further comprising assigning weights to keywords assigned to the advertisements that are used to select advertisements for display on the current user selected web page.

6. The method of claim 1 wherein advertisements displayed on a current user selected web page are based on keywords from the articles viewed by the user in the past that are stored in the user profile and keywords from an article displayed on the current user selected web page.

7. The method of claim 1 wherein advertisements are selected for display without regard for user specific traits.

8. The method of claim 7 wherein the user specific traits comprise age, sex, or income.

9. The method of claim 1 wherein said current user selected web page is in a first language and said keywords from the articles viewed by the user in the past that are stored in the user profile cause advertisements displayed on the current user selected web page to be in a second language.

10. A system for selecting textual advertisements for display on a web page based on user history comprising:
a) a web server in communication with a user terminal for displaying web pages, the web server being programmed to identify a user accessing the web server and identify keywords in articles displayed on the user terminal; and
b) a user profile database in communication with the web server for storing identified keywords from the articles displayed on the user terminal in a user profile, said web server displays advertisements on a current user selected web page based on keywords from articles viewed by the user in the past that are stored in the user profile.

11. The system of claim 10 further comprising an advertisement server for storing keywords assigned to advertisements and wherein advertisements selected for display on the current user selected web page have assigned keywords that match keywords stored in the user profile.

12. The system of claim 10 further comprising assigning weights to keywords stored in the user profile that are used to select advertisements for display on the current user selected web page.

13. The system of claim 12 wherein said weights are reduced as time elapses.

14. The system of claim 11 further comprising assigning weights to keywords assigned to the advertisements that are used to select advertisements for display on the current user selected web page.

15. The system of claim 10 wherein advertisements displayed on the current user selected web page are based on keywords from the articles viewed by the user in the past that are stored in the user profile and keywords from an article displayed on the current user selected web page.

16. The system of claim 1 wherein advertisements are selected for display without regard for user specific traits.

17. The system of claim 16 wherein the user specific traits comprise age, sex, or income.

18. The system of claim 1 wherein said current user selected web page is in a first language and said keywords from the articles viewed by the user in the past that are stored in the user profile cause advertisements displayed on the current user selected web page to be in a second language.

19. A computer readable medium having computer executable instructions stored thereon for performing a method of selecting textual advertisements for display on a web page based on user history, the method comprising:
a) identifying a user accessing a web site;
b) identifying keywords in articles displayed on web pages viewed by the user;
c) storing identified keywords from the articles viewed by the user in a user profile;
d) displaying advertisements in connection with a current user selected web page based on keywords from the articles viewed by the user in the past that are stored in the user profile.

20. The computer readable medium of claim 19 wherein the method further comprises assigning keywords to advertisements and wherein advertisements displayed on the current user selected web page have assigned keywords that are stored in the user profile.

21. The computer readable medium of claim 19 wherein the method further comprises assigning weights to keywords stored in the user profile that are used to select advertisements for display on the current user selected web page.

22. The computer readable medium of claim 20 wherein the method further comprises assigning weights to keywords assigned to the advertisements that are used to select advertisements for display on the current user selected web page.

23. The computer readable medium of claim 19 wherein advertisements displayed on a current user selected web page are based on keywords from the articles viewed by the user in the past that are stored in the user profile and keywords from an article displayed on the current user selected web page.

24. The computer readable medium of claim 19 wherein said current user selected web page is in a first language and said keywords from the articles viewed by the user in the past that are stored in the user profile cause advertisements displayed on the current user selected web page to be in a second language.
